(19) **Europäisches Patentamt / European Patent Office / Office européen des brevets**

(11) **EP 4 718 539 A1**

(12) **EUROPEAN PATENT APPLICATION**
published in accordance with Art. 153(4) EPC

(43) Date of publication:
01.04.2026 Bulletin 2026/14

(21) Application number: 24902497.7

(22) Date of filing: 18.11.2024

(51) International Patent Classification (IPC):
$H01M\ 4/58$ (2010.01)    $H01M\ 4/136$ (2010.01)
$H01M\ 4/36$ (2006.01)    $H01M\ 4/62$ (2006.01)
$C01B\ 25/45$ (2006.01)    $H01M\ 10/0525$ (2010.01)

(52) Cooperative Patent Classification (CPC):
Y02E 60/10

(86) International application number:
PCT/CN2024/132803

(87) International publication number:
WO 2025/124075 (19.06.2025 Gazette 2025/25)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 14.12.2023 CN 202311729060

(71) Applicants:
• Ningbo Ronbay New Energy Technology Co.,
Ltd.
Yuyao Ningbo, Zhejiang 315402 (CN)
• Tianjin Ronbay Skyland Technology Co., Ltd.
Tianjin 300461 (CN)

(72) Inventors:
• CHEN, Haiyang
Ningbo, Zhejiang 315402 (CN)

• YUAN, Yong
Tianjin 300461 (CN)
• TIAN, Huaiyuan
Ningbo, Zhejiang 315402 (CN)
• SONG, Jie
Ningbo, Zhejiang 315402 (CN)
• WANG, Xueying
Ningbo, Zhejiang 315402 (CN)
• LIU, Yi
Ningbo, Zhejiang 315402 (CN)
• CHENG, Yulong
Ningbo, Zhejiang 315402 (CN)
• HU, Pingping
Ningbo, Zhejiang 315402 (CN)
• YAN, Xufeng
Ningbo, Zhejiang 315402 (CN)

(74) Representative: J A Kemp LLP
80 Turnmill Street
London EC1M 5QU (GB)

(54) **POSITIVE ELECTRODE ACTIVE MATERIAL AND PREPARATION METHOD THEREFOR**

(57) A positive electrode active material and a preparation method thereof. The positive electrode active material includes a secondary particle composed of primary particles; and the primary particle includes $Li_{1+a}Fe_{1-x-y}Mn_xA_y(PO_4)$, where $-0.1\leq a\leq0.4$, $0.5\leq x\leq0.7$, $0\leq y\leq0.01$, $A$ includes at least one of Al, Mg, Ni, Co, Ti, Ga, Cu, V, Nb, Zr, Ce, In, Zn, or Y, and the positive electrode active material has a crystallinity of not less than 98%. The positive electrode active material has high crystallinity, and the ionic conductivity and electronic conductivity thereof are high. Applying the positive electrode active material to a lithium-ion battery can significantly improve the rate performance of the battery.

C01-0914-JTMFP64-4-2Q
SU8010 5.0kV 8.4mm x10.0k SE(U) 9/14/2023    5.00um

FIG. 1

# EP 4 718 539 A1

## Description

This application claims priority to Chinese Patent Application No. 202311729060.2, filed with the China National Intellectual Property Administration on December 14, 2023, and entitled "POSITIVE ELECTRODE ACTIVE MATERIAL AND PREPARATION METHOD THEREOF", which is hereby incorporated by reference in its entirety.

## TECHNICAL FIELD

The present invention belongs to the field of lithium-ion batteries and relates to a positive electrode active material, and in particular to a positive electrode active material and a preparation method thereof.

## BACKGROUND

Lithium-ion battery is widely used in fields such as transportation power supply, electric energy storage power supply, mobile communication power supply, new energy storage power supply, aerospace and military power supply, due to its high energy density, high safety, no environmental pollution, small size and light weight. Moreover, with the continuous development of lithium-ion battery, the market has put forward higher requirements on the capacity and cycle life of the lithium-ion battery.

As an important component of the lithium-ion battery, a positive electrode active material accounts for a larger proportion in the lithium-ion battery. Therefore, the properties of positive electrode active material largely affect the performance of battery. Currently, the main types of positive electrode active material are $LiCoO_2$ positive electrode material, $LiNiO_2$ positive electrode material, Li-Mn-O series positive electrode material, $LiFePO_4$ positive electrode material, and conductive polymer positive electrode material, etc. Among them, lithium iron phosphate positive electrode materials have attracted much attention in the industry due to their advantages such as high theoretical capacity, low price, environmental friendliness, stable structure and long cycle life. However, their discharge voltage and energy density remain unsatisfactory. As a solid solution formed by combining lithium manganese phosphate and lithium iron phosphate, lithium manganese iron phosphate exhibits improved energy density and discharge voltage, but its ionic conductivity and electronic conductivity are low, resulting in poor rate performance of battery.

Therefore, there is an urgent need to develop a highly conductive lithium manganese iron phosphate positive electrode active material to improve the rate performance of battery.

## SUMMARY

In view of the above-mentioned defects, the present application provides a positive electrode active material having high ionic conductivity and electronic conductivity, which can significantly improve the rate performance of lithium-ion battery.

The present application provides a method for preparing a positive electrode active material. The positive electrode active material prepared by this preparation method has high ionic conductivity and electronic conductivity.

The present application provides a positive electrode sheet, including the above-mentioned positive electrode active material or the positive electrode active material prepared by the above-mentioned method for preparing the positive electrode active material. Due to the high ionic conductivity and electronic conductivity of the positive electrode active material, the application of the positive electrode sheet in the lithium-ion battery enables the battery to have a high rate performance.

The present application provides a lithium-ion battery, including the above-mentioned positive electrode active material or the positive electrode active material prepared by the above-mentioned method for preparing the positive electrode active material or the above-mentioned positive electrode sheet; and the lithium-ion battery has a high rate performance.

The present application provides a positive electrode active material, including a secondary particle composed of primary particles, where the primary particles have a chemical composition shown in Formula 1,

$$Li_{1+a}Fe_{1-x-y}Mn_xA_y(PO_4) \qquad \text{Formula 1,}$$

in Formula 1, $-0.1 \leq a \leq 0.4$, $0.5 \leq x \leq 0.7$, $0 \leq y \leq 0.01$, and A includes at least one of Al, Mg, Ni, Co, Ti, Ga, Cu, V, Nb, Zr, Ce, In, Zn, or Y;
the positive electrode active material has a crystallinity of not less than 98%.

Further, the positive electrode active material further includes a carbon coating layer covering a surface of the primary particles; and

a mass percentage of carbon element in the positive electrode active material is 1.8-2.0wt%.

Further, the positive electrode active material has a specific surface area of $17\text{-}22m^2/g$, and/or the positive electrode active material has a powder compaction density of $2.1\text{-}2.4g/cm^3$.

Further, the primary particles have a median particle size of $0.25\text{-}0.4\mu m$, and/or the secondary particle has a median particle size of $5\text{-}6\mu m$.

The present application further provides a method for preparing the positive electrode active material as described in any one of the above, including the following steps.

(1) Adding a first raw material and deionized water into a second raw material to obtain a first mixed slurry; where the second raw material includes a lithium source, an iron source, a manganese source, a phosphorus source, and a dopant, and the first raw material includes lithium manganese iron phosphate having a chemical composition shown in Formula 2,

$$Li_{1+b}Fe_{1-c}Mn_cPO_4 \qquad \text{Formula 2,}$$

in the Formula 2, $-0.1{\le}b{\le}0.4$, and $0.5{\le}c{\le}0.7$.

(2) Grinding the first mixed slurry to obtain a second mixed slurry; where the second mixed slurry has a median particle size of 200-400nm.

(3) Granulating the second mixed slurry to obtain a third raw material having a median particle size of $3\text{-}4\mu m$.

(4) Sintering the third raw material under a protective atmosphere at a sintering temperature of 650-670°C for 6-8h with a heating rate of 3-8°C/min to obtain the positive electrode active material.

Further, in step (1), the first raw material further includes lithium iron phosphate $Li_3Fe_2(PO_4)_3$ and lithium manganese phosphate $LiMnPO_4$;

the first raw material includes, by mass percentage, 75-84wt% of lithium manganese iron phosphate, 7-10wt% of lithium iron phosphate, and 9-15wt% of lithium manganese phosphate;

and/or, the first raw material accounts for 10-15% of a theoretical generation mass of the positive electrode active material.

Further, in step (1), the second raw material further includes a carbon source; and the carbon source accounts for 8-12% of a total of the theoretical generation mass of the positive electrode active material and a mass of the first raw material.

Further, in step (2), the grinding includes a first grinding and a second grinding;

the first grinding has a grinding speed of 1400-1700r/min and a grinding time of 50-70min;
the second grinding has a grinding speed of 1600-2000r/min and a grinding time of 50-70min.

The present application also provides a positive electrode sheet, including the positive electrode active material as described in any of the above or including the positive electrode active material prepared by any of the methods for preparing the positive electrode active material as described above.

The present application also provides a lithium-ion battery, including the positive electrode active material as described in any of the above or including the positive electrode active material prepared by any of the methods for preparing the positive electrode active material as described above or the above-mentioned positive electrode sheet.

The positive electrode active material in the present application includes a secondary particle composed of primary particles, where the primary particle includes the chemical composition of Formula 1, with the crystallinity being not less than 98%, and the content of impurity phases ($Li_3Fe_2(PO_4)_3$ and $LiMnPO_4$) is small, which can effectively improve the ionic conductivity and electronic conductivity of the positive electrode active material, thereby effectively improving the rate performance of the battery.

**BRIEF DESCRIPTION OF DRAWINGS**

FIG. 1 is an SEM image of a positive electrode active material in Example 1 of the present application.
FIG. 2 shows XRD patterns of a first raw material in Example 1 of the present application.
FIG. 3 shows XRD patterns of positive electrode active materials in Example 1 and Comparative Example 1 of the present application.

## DESCRIPTION OF EMBODIMENTS

In order to make the purpose, technical solutions and advantages of the present application clearer, the technical solutions in the embodiments of the present application will be clearly and completely described below in combination with the embodiments of the present application. Obviously, the described embodiments are part of the embodiments of the present application, not all of them. Based on the embodiments in the present application, all other embodiments obtained by those of ordinary skill in the art without making creative work shall fall within the scope of protection of the present application.

A first aspect of the present application provides a positive electrode active material, including a secondary particle composed of primary particles, and the primary particle includes a chemical composition shown in Formula 1:

$$Li_{1+a}Fe_{1-x-y}Mn_xA_y(PO_4) \qquad \text{Formula 1,}$$

in Formula 1, $-0.1 \leq a \leq 0.4$, $0.5 \leq x \leq 0.7$, $0 \leq y \leq 0.01$, A includes at least one of Al, Mg, Ni, Co, Ti, Ga, Cu, V, Nb, Zr, Ce, In, Zn, or Y;

the positive electrode active material has a crystallinity of not less than 98%.

Specifically, the crystallinity of the positive electrode active material may be determined by obtaining a diffraction peak area A1 of a crystalline phase and a diffraction peak area A2 of an amorphous phase from the XRD spectrum, and calculating using Formula 2:

$$\text{Crystallinity (\%)} = A1 / (A1 + A2) \times 100\% \qquad \text{Formula 2.}$$

The positive electrode active material in the present application includes a secondary particle composed of primary particles, where the primary particle includes the chemical composition shown in Formula 1, with the crystallinity being not less than 98%. Since impurity phases, namely $Li_3Fe_2(PO_4)_3$ and $LiMnPO_4$, inevitably exist in the positive electrode active material, the ionic conductivity and electronic conductivity thereof are both low. During the charge and discharge process, the lithium ions included in the impurity phase are difficult to deintercalate, resulting in a decrease in the rate performance of the battery. However, the crystallinity of the positive electrode active material of the present application is not less than 98%, thus the content of impurity phases in the positive electrode active material is low, which may effectively improve the overall ionic conductivity and electronic conductivity of the positive electrode active material, thereby enabling the lithium-ion battery to have a high rate performance.

In addition, since part of the lithium ions in the positive electrode active material are distributed in the impurity phase, the presence of the impurity phase leads to a decrease in the number of lithium ions that can migrate freely. Therefore, the positive electrode active material of the present application also has a high capacity.

Specifically, the content of the impurity phase in the positive electrode active material may be obtained through fitting calculation using XRD measurement patterns and XRD standard cards.

In a specific embodiment, the positive electrode active material also includes a carbon coating layer covering the surface of the primary particles, with a mass percentage of carbon element in the positive electrode active material being 1.8-2.0wt%. Specifically, the mass percentage of carbon element may be measured using a carbon-sulfur analyzer. By applying carbon coating on the surface of the primary particles, the electronic conductivity may be further improved, thereby making the battery have higher rate performance. At the same time, the carbon coating layer may also reduce the contact area between the positive electrode active material and the electrolyte, avoid side reactions between the positive electrode active material and the electrolyte, and make the battery have excellent cycle performance. When the mass percentage of carbon element in the positive electrode active material is within the above range, it can not only effectively improve the electronic conductivity of the positive electrode active material, but also maintain a short lithium-ion migration path, which will not hinder the deintercalation of lithium ions, thus enhancing the specific capacity and rate performance of the battery. Specifically, the mass percentage of carbon element here refers to the mass percentage of the total carbon element included in the positive electrode active material.

In a specific embodiment, the positive electrode active material has a specific surface area of $17\text{-}22m^2/g$. Within this range, the positive electrode active material has a high specific surface area, which can increase the contact area between the electrode and the electrolyte to a certain extent, and accelerate the electrochemical reaction rate, thereby improving the rate performance of the battery; at the same time, the specific surface area of the positive electrode active material is not excessively large, which effectively reduces the occurrence of side reactions, and cuts down the initial irreversible lithium loss, thereby endowing the battery with excellent cycling performance.

In a specific embodiment, the positive electrode active material has a powder compaction density of $2.1\text{-}2.4g/cm^3$. Within this range, the positive electrode sheet has a high compaction density without hindering the migration of lithium ions, enabling the battery to possess both a high rate performance and a high energy density.

In a specific embodiment, the primary particle has a median particle size of 0.25-0.4$\mu$m. When the median particle size of the primary particle is within the above range, the migration path of lithium ions is short, which can further improve the rate performance of the positive electrode active material.

In a specific embodiment, the secondary particle has a median particle size of 5-6$\mu$m. Within this range, the particle size of the secondary particle is appropriate, providing a short lithium-ion diffusion path, and further improving the rate performance of the lithium-ion battery including the positive electrode active material.

A second aspect of the present application provides a method for preparing any one of the above-mentioned positive electrode active materials, including the following steps.

(1) Adding a first raw material and deionized water into a second raw material to obtain a first mixed slurry; where the second raw material includes a lithium source, an iron source, a manganese source, a phosphorus source, and a dopant, and the first raw material includes lithium manganese iron phosphate having a chemical composition shown in Formula 2:

$$Li_{1+b}Fe_{1-c}Mn_cPO_4 \qquad \text{Formula 2,}$$

in Formula 2, $-0.1 \leq b \leq 0.4$, $0.5 \leq c \leq 0.7$.

(2) Grinding the first mixed slurry to obtain a second mixed slurry, where the second mixed slurry has a median particle size of 200-400nm.

(3) Granulating the second mixed slurry to obtain a third raw material having a median particle size of 3-4$\mu$m.

(4) Sintering the third raw material under a protective atmosphere at a sintering temperature of 650-670°C for 6-8h with a heating rate of 3-8°C/min to obtain the positive electrode active material.

Specifically, in step (1), the lithium source, the iron source, the manganese source, the phosphorus source, and the dopant are mixed to obtain the second raw material, and then the first raw material and deionized water are added to the second raw material to obtain the first mixed slurry, where the first raw material includes lithium manganese iron phosphate having the chemical composition shown in Formula 2, with a solid-to-liquid ratio of the first mixed slurry being preferably in a range of 1:3 to 1:5.

The lithium source of the present application refers to a raw material that provides lithium element, the iron source refers to a raw material that provides iron element, the manganese source refers to a raw material that provides manganese element, the phosphorus source refers to a raw material that provides phosphorus element, and the dopant refers to a compound including at least one of Al, Mg, Ni, Co, Ti, Ga, Cu, V, Nb, Zr, Ce, In, Zn, or Y; where any material containing target elements (lithium, iron, manganese, phosphorus) falls within the scope of the definition in the present application, and one target element may be introduced into the reaction system by one or more raw materials. Exemplarily, the lithium source may be selected from at least one of lithium carbonate, lithium hydroxide, lithium dihydrogen phosphate, or lithium oxalate; the iron source may be selected from at least one of iron phosphate, ferric oxide, iron nitrate, or iron oxalate; the manganese source may be selected from at least one of manganese carbonate, trimanganese tetraoxide, manganese nitrate, manganese chloride, or manganese sulfate; and the phosphorus source may be selected from at least one of lithium dihydrogen phosphate, ammonium dihydrogen phosphate, phosphoric acid, ammonium phosphate, or ammonium monohydrogen phosphate. It should be explained that when two or more elements of the target elements are included in the raw material at the same time, the raw material may be understood as the element source for the two target elements. For example, when the raw material is lithium dihydrogen phosphate, it serves as both a lithium source and a phosphorus source.

The molar ratio between the lithium source, the iron source, the manganese source, the phosphorus source, and the dopant are not specifically limited in the present application, provided that the chemical formula of the prepared positive electrode active material satisfies Formula 1.

The specific sources of lithium source, iron source, manganese source, phosphorus source, and dopant are not limited in the present application, which, for example, can be obtained through commercial or conventional preparation means.

The methods for mixing are not specifically limited in the present application, provided that the second raw material and the first raw material are thoroughly mixed in the deionized water. For example, any one of mechanical stirring, liquid stirring, or gas stirring may be used.

In step (2), the first mixed slurry is ground to obtain the second mixed slurry, and the median particle size of the second mixed slurry is 200-400nm, so that the second raw material and the first raw material included in the second mixed slurry are fine, uniform, and smooth-surfaced, with the first raw material being evenly dispersed in the second mixed slurry, which is conducive to forming more uniform positive electrode active material particles in the subsequent sintering process and improving the crystallinity of the positive electrode active material.

In step (3), the above-mentioned ground second mixed slurry is subjected to granulation and reshaping. Preferably, a spray dryer is selected for granulation and reshaping, with an inlet temperature of 200-210°C and an outlet temperature of 90-95°C, so as to obtain a third raw material with a particle size of 3-4$\mu$m.

In step (4), the third raw material is heated from room temperature to a sintering temperature of 650-670°C at a heating rate of 3-8°C/min, and then subjected to soaking sintering for 6-8h under a protective atmosphere to obtain a sintered product. During this process, the first raw material decomposes at high temperature to form crystal nuclei, which can induce the metal ions in the second raw material to grow rapidly along an active crystal plane of the first raw material, effectively inhibiting the formation of impurity phases. The sintered product is crushed and sieved through a screen to obtain a positive electrode active material with a high degree of crystallinity.

The protective atmosphere is not specifically limited in the present application. Exemplarily, the protective atmosphere may be selected from any one of argon, nitrogen, or helium.

The methods for crushing and the screen are not specifically limited in the present application. Exemplarily, the methods for crushing may be jaw crusher with rollers crushing, mechanical mill crushing, or an air-jet mill classification crushing, and a mesh size of screen being 280 mesh is preferred.

In the method for preparing the positive electrode active material in the present application, lithium manganese phosphate and lithium iron phosphate included in the first raw material react with the second raw material to generate new lithium manganese iron phosphate, and at the same time, the metal elements in the second raw material grow rapidly along the active crystal plane of the lithium manganese iron phosphate in the first raw material, which can effectively reduce the content of the impurity phases in the positive electrode active material, improve the crystallinity of the positive electrode active material, and keep the crystallinity within the above-mentioned range. At the same time, since the first raw material can be directly decomposed into crystal nuclei during the heating process, the preparation method may accelerate the crystallization of the system, shorten the reaction time and reduce the reaction temperature, thereby achieving the purpose of cost reduction and efficiency improvement.

In a specific embodiment, in step (1), the first raw material also includes lithium iron phosphate $Li_3Fe_2(PO_4)_3$ and lithium manganese phosphate $LiMnPO_4$.

The first raw material includes, by mass percentage: 75-84wt% of lithium manganese iron phosphate, 7-10wt% of lithium iron phosphate, and 9-15wt% of lithium manganese phosphate. When the lithium manganese iron phosphate, lithium iron phosphate, and lithium manganese phosphate included in the first raw material are within the above ranges, the content of the impurity phases in the finally prepared positive electrode active material can be lower, which results in a high crystallinity of the positive electrode active material, thereby endowing the lithium-ion battery with high rate performance.

In a specific embodiment, the first raw material accounts for 10-15% of the theoretical generation mass of the positive electrode active material. Within this range, the crystallinity of the positive electrode active material can be further significantly improved, so that the positive electrode active material has high ionic conductivity and electronic conductivity, and the rate performance of the lithium-ion battery is improved.

The calculation method of the theoretical generation mass of the positive electrode active material in the present application is as follows.

Assuming that the lithium source, iron source, manganese source, phosphorus source and dopant in the first raw material are in a molar ratio of $(1 + a): (1 - x - y): x: 1: y$, the theoretical generation mass of 1 mol of positive electrode active material is calculated by Formula 3:

$$\text{theoretical generation mass of 1 mol of positive electrode active material (g)} = (1 + a) \times M_1 + (1 - x - y) \times M_2 + x \times M_3 + M_4 + y \times M_5 \quad \text{Formula 3,}$$

in the Formula 3, $M_1$ is a molar mass of Li, $M_2$ is a molar mass of Fe, $M_3$ is a molar mass of Mn, $M_4$ is a molar mass of $PO_4^-$, and $M_5$ is a molar mass of *A*.

In a specific embodiment, in step (1), the second raw material also includes a carbon source; and the carbon source accounts for 8-12% of a total mass of the theoretical generation mass of the positive electrode active material and the first raw material. During the sintering process, the carbon source decomposes at a high temperature and forms a coating layer on the surface of the primary particles, which not only improves the electrical conductivity of the positive electrode active material but also effectively inhibits the excessive growth of the primary particles at the same time. Within this range, both of the ionic conductivity and electronic conductivity of the positive electrode active material can be effectively improved, without hindering the intercalation and deintercalation of lithium ions, thereby endowing the battery with higher specific capacity and rate performance.

The carbon source of the present application refers to a raw material that provides carbon element. Any material containing the target element falls within the scope of the definition in the present application, and one target element may be introduced into the reaction system through one or more raw materials. Exemplarily, the carbon source may be selected from at least one of glucose, sucrose, starch, polyvinyl alcohol, polyethylene glycol, citric acid, or ascorbic acid.

In a specific embodiment, in step (2), the grinding includes a first grinding and a second grinding.

The first grinding has a grinding speed of 1400-1700r/min and a grinding time of 50-70min.

The second grinding has a grinding speed of 1600-2000r/min and a grinding time of 50-70min. When the grinding speed and the grinding time for both the first grinding and the second grinding are within the above ranges, the first raw material and the second raw material can be made finer and more uniform, and the first raw material is more uniformly distributed in the second mixed slurry, further improving the uniformity and the crystallinity of the positive electrode active material.

The grinding methods of the first grinding and the second grinding are not specifically limited in the present application. For example, any one of basket mill, ball mill, or sand mill may be selected for the first grinding, and any one of sand mill or ball mill may be selected for the second grinding.

A third aspect of the present application provides a positive electrode sheet, including the positive electrode active material of the first aspect or the positive electrode active material prepared by the method for preparing the positive electrode active material of the second aspect. Since the positive electrode active material has a higher degree of crystallinity, and thus has higher ionic conductivity and electronic conductivity, applying the positive electrode sheet including the positive electrode active material to a lithium-ion battery can effectively improve the rate performance of the battery.

In a fourth aspect, the present application provides a lithium-ion battery, including the positive electrode active material of the first aspect, or the positive electrode active material prepared by the method for preparing the positive electrode active material of the second aspect, or the positive electrode sheet of the third aspect. Since the lithium-ion battery includes the positive electrode sheet of the third aspect, the lithium-ion battery has a higher rate performance.

Hereinafter, the positive electrode active material of the present application is introduced in detail through specific examples.

Example 1

(1) 3.69kg of lithium carbonate, 6.78kg of manganese carbonate, 6.03kg of iron phosphate, 6.90kg of ammonium dihydrogen phosphate, and 0.04kg of magnesium oxide were weighed respectively in a molar ratio of 0.50:0.59:0.4:0.6:0.01, and mixed to obtain a second raw material. The theoretical generation mass of 100mol of positive electrode active material was 15.69kg. According to the first raw material accounting for 12% of the theoretical generation mass of the positive electrode active material, 1.88kg of the first raw material was weighed; and according to sucrose accounting for 10% of a total mass of the theoretical generation mass of the positive electrode active material and the first raw material, 1.757kg of sucrose was weighed. The first raw material, the sucrose and the second raw material were mixed, and deionized water was added to obtain a first mixed slurry with a solid-liquid ratio of 1:4; where the first raw material included, by mass percentage, 80wt% of lithium manganese iron phosphate, 8wt% of lithium iron phosphate, and 12wt% of lithium manganese phosphate, with the chemical composition of the lithium manganese iron phosphate being $LiFe_{0.4}Mn_{0.6}PO_4$.

(2) The above first mixed slurry was coarsely ground at a grinding speed of 1700r/min for 60min, and then ground at a grinding speed of 1800r/min for 50min to obtain a second mixed slurry with a median particle size of 330nm.

(3) The above second mixed slurry was granulated and reshaped by a spray dryer to obtain a third raw material with a median particle size of 3.6μm, with the inlet temperature of the spray dryer being 210°C, and the outlet temperature of the spray dryer being 95°C.

(4) The third raw material was heated from room temperature to a sintering temperature of 650°C at a heating rate of 5°C/min and subjected to a soaking sintering for 6h under a nitrogen protective atmosphere to obtain the positive electrode active material of this example. The chemical composition of the positive electrode active material was $LiFe_{0.4}Mn_{0.59}Mg_{0.01}(PO_4)$, and the surface of the primary particles of the positive electrode active material was coated with a carbon coating layer. By measurement with a carbon-sulfur analyzer, the mass percentage of carbon element in the positive electrode active material was 1.93%.

Example 2

(1) 3.69kg of lithium carbonate, 6.78kg of manganese carbonate, 6.03kg of iron phosphate, 6.90kg of ammonium dihydrogen phosphate, and 0.04kg of magnesium oxide were weighed respectively in a molar ratio of 0.50:0.59:0.4:0.6:0.01, and mixed to obtain a second raw material. The theoretical generation mass of 100mol of positive electrode active material was 15.69kg. According to the first raw material accounting for 12% of the theoretical generation mass of the positive electrode active material, 1.88kg of the first raw material was weighed; and according to sucrose accounting for 8% of a total mass of the theoretical generation mass of the positive electrode active material and the first raw material, 1.406kg of sucrose was weighed. The first raw material, the sucrose and the second raw material were mixed, and deionized water was added to obtain a first mixed slurry with a solid-liquid ratio of 1:4; where the first raw material included, by mass percentage, 80wt% of lithium manganese iron phosphate, 8wt% of lithium iron phosphate, and 12wt% of lithium manganese phosphate, with the chemical composition of the lithium manganese iron phosphate being $LiFe_{0.4}Mn_{0.6}PO_4$.

(2) The above first mixed slurry was coarsely ground at a grinding speed of 1700r/min for 60min, and then ground at a grinding speed of 1800r/min for 50min to obtain a second mixed slurry with a median particle size of 330nm.

(3) The above second mixed slurry was granulated and reshaped by a spray dryer to obtain a third raw material with a median particle size of $3.6\mu m$, with the inlet temperature of the spray dryer being 210°C, and the outlet temperature of the spray dryer being 95°C.

(4) The third raw material was heated from room temperature to a sintering temperature of 670°C at a heating rate of 3°C/min and subjected to a soaking sintering for 8h under a nitrogen protective atmosphere to obtain the positive electrode active material of this example. The chemical composition of the positive electrode active material was $LiFe_{0.4}Mn_{0.59}Mg_{0.01}(PO_4)$, and the surface of the primary particles of the positive electrode active material was coated with a carbon coating layer. By measurement with a carbon-sulfur analyzer, the mass percentage of carbon element in the positive electrode active material was 1.85%.

Example 3

(1) 2.39kg of lithium hydroxide, 6.78kg of manganese carbonate, 3.19kg of ferric oxide, 11.50kg of ammonium dihydrogen phosphate, and 0.04kg of magnesium oxide were weighed respectively in a molar ratio of 1:0.59:0.2:1:0.01, and mixed to obtain a second raw material. The theoretical generation mass of 100mol of positive electrode active material was 15.69kg. According to the first raw material accounting for 12% of the theoretical generation mass of the positive electrode active material, 1.88kg of the first raw material was weighed; and according to sucrose accounting for 12% of a total mass of the theoretical generation mass of the positive electrode active material and the first raw material, 2.108kg of sucrose was weighed. The first raw material, the sucrose and the second raw material were mixed, and deionized water was added to obtain a first mixed slurry with a solid-liquid ratio of 1:4; where the first raw material included, by mass percentage, 80wt% of lithium manganese iron phosphate, 8wt% of lithium iron phosphate, and 12wt% of lithium manganese phosphate, with the chemical composition of the lithium manganese iron phosphate being $LiFe_{0.4}Mn_{0.6}PO_4$.

(2) The above first mixed slurry was coarsely ground at a grinding speed of 1700r/min for 60min, and then ground at a grinding speed of 1800r/min for 50min to obtain a second mixed slurry with a median particle size of 330nm.

(3) The above second mixed slurry was granulated and reshaped by a spray dryer to obtain a third raw material with a median particle size of $3.6\mu m$, with the inlet temperature of the spray dryer being 210°C, and the outlet temperature of the spray dryer being 95°C.

(4) The third raw material was heated from room temperature to a sintering temperature of 650°C at a heating rate of 8°C/min and subjected to a soaking sintering for 6h under a nitrogen protective atmosphere to obtain the positive electrode active material of this example. The chemical composition of the positive electrode active material was $LiFe_{0.4}Mn_{0.59}Mg_{0.01}(PO_4)$, and the surface of the primary particles of the positive electrode active material was coated with a carbon coating layer. By measurement with a carbon-sulfur analyzer, the mass percentage of carbon element in the positive electrode active material was 1.96%.

Example 4

(1) 5.10kg of lithium oxalate, 6.78kg of manganese carbonate, 5.75kg of ferrous oxalate, 6.90kg of ammonium dihydrogen phosphate, and 0.04kg of magnesium oxide were weighed respectively in a molar ratio of 0.50:0.59:0.4:0.6:0.01, and mixed to obtain a second raw material. The theoretical generation mass of 100mol of positive electrode active material was 15.69kg. According to the first raw material accounting for 12% of the theoretical generation mass of the positive electrode active material, 1.88kg of the first raw material was weighed; and according to sucrose accounting for 10% of a total mass of the theoretical generation mass of the positive electrode active material and the first raw material, 1.757kg of sucrose was weighed. The first raw material, the sucrose and the second raw material were mixed, and deionized water was added to obtain a first mixed slurry with a solid-liquid ratio of 1:4;

where the first raw material included, by mass percentage, 80wt% of lithium manganese iron phosphate, 8wt% of lithium iron phosphate, and 12wt% of lithium manganese phosphate, with the chemical composition of the lithium manganese iron phosphate being $LiFe_{0.4}Mn_{0.6}PO_4$.

(2) The above first mixed slurry was coarsely ground at a grinding speed of 1700r/min for 70min, and then ground at a grinding speed of 2000r/min for 70min to obtain a second mixed slurry with a median particle size of 200nm.

(3) The above second mixed slurry was granulated and reshaped by a spray dryer to obtain a third raw material with a median particle size of 3.6$\mu$m, with the inlet temperature of the spray dryer being 210°C, and the outlet temperature of the spray dryer being 95°C.

(4) The third raw material was heated from room temperature to a sintering temperature of 650°C at a heating rate of 8°C/min and subjected to a soaking sintering for 6h under a nitrogen protective atmosphere to obtain the positive electrode active material of this example. The chemical composition of the positive electrode active material was $LiFe_{0.4}Mn_{0.59}Mg_{0.01}(PO_4)$, and the surface of the primary particles of the positive electrode active material was coated with a carbon coating layer. By measurement with a carbon-sulfur analyzer, the mass percentage of carbon element in the positive electrode active material was 1.92%.

Example 5

(1) 3.69kg of lithium carbonate, 6.78kg of manganese carbonate, 6.03kg of iron phosphate, 6.90kg of ammonium dihydrogen phosphate, and 0.04kg of magnesium oxide were weighed respectively in a molar ratio of 0.50:0.59:0.4:0.6:0.01, and mixed to obtain a second raw material. The theoretical generation mass of positive electrode active material was 15.69kg. According to the first raw material accounting for 12% of the theoretical generation mass of the positive electrode active material, 1.88kg of the first raw material was weighed; and according to sucrose accounting for 10% of a total mass of the theoretical generation mass of the positive electrode active material and the first raw material, 1.757kg of sucrose was weighed. The first raw material, the sucrose and the second raw material were mixed, and deionized water was added to obtain a first mixed slurry with a solid-liquid ratio of 1:4; where the first raw material included, by mass percentage, 80wt% of lithium manganese iron phosphate, 8wt% of lithium iron phosphate, and 12wt% of lithium manganese phosphate, with the chemical composition of the lithium manganese iron phosphate being $LiFe_{0.4}Mn_{0.6}PO_4$.

(2) The above first mixed slurry was coarsely ground at a grinding speed of 1400r/min for 50min, and then ground at a grinding speed of 1600r/min for 50min to obtain a second mixed slurry with a median particle size of 400nm.

(3) The above second mixed slurry was granulated and reshaped by a spray dryer to obtain a third raw material with a median particle size of 3.6$\mu$m, with the inlet temperature of the spray dryer being 210°C, and the outlet temperature of the spray dryer being 95°C.

(4) The third raw material was heated from room temperature to a sintering temperature of 670°C at a heating rate of 3°C/min and subjected to a soaking sintering for 8h under a nitrogen protective atmosphere to obtain the positive electrode active material of this example. The chemical composition of the positive electrode active material was $LiFe_{0.4}Mn_{0.59}Mg_{0.01}(PO_4)$, and the surface of the primary particles of the positive electrode active material was coated with a carbon coating layer. By measurement with a carbon-sulfur analyzer, the mass percentage of carbon element in the positive electrode active material was 1.90%.

Example 6

(1) 3.69kg of lithium carbonate, 6.78kg of manganese carbonate, 6.03kg of iron phosphate, 6.90kg of ammonium dihydrogen phosphate, and 0.04kg of magnesium oxide were weighed respectively in a molar ratio of 0.50:0.59:0.4:0.6:0.01, and mixed to obtain a second raw material. The theoretical generation mass of 100mol of positive electrode active material was 15.69kg. According to the first raw material accounting for 12% of the theoretical generation mass of the positive electrode active material, 1.88kg of the first raw material was weighed; and according to sucrose accounting for 10% of a total mass of the theoretical generation mass of the positive electrode active material and the first raw material, 1.757kg of sucrose was weighed. The first raw material, the sucrose and the second raw material were mixed, and deionized water was added to obtain a first mixed slurry with a solid-liquid ratio of 1:4; where the first raw material included, by mass percentage, 75wt% of lithium manganese iron phosphate, 10wt% of lithium iron phosphate, and 15wt% of lithium manganese phosphate, with the chemical composition of the lithium manganese iron phosphate being $LiFe_{0.4}Mn_{0.6}PO_4$.

(2) The above first mixed slurry was coarsely ground at a grinding speed of 1400r/min for 50min, and then ground at a grinding speed of 1600r/min for 50min to obtain a second mixed slurry with a median particle size of 400nm.

(3) The above second mixed slurry was granulated and reshaped by a spray dryer to obtain a third raw material with a median particle size of 3.6μm, with the inlet temperature of the spray dryer being 210°C, and the outlet temperature of the spray dryer being 95°C.

(4) The third raw material was heated from room temperature to a sintering temperature of 650°C at a heating rate of 3°C/min and subjected to a soaking sintering for 6h under a nitrogen protective atmosphere to obtain the positive electrode active material of this example. The chemical composition of the positive electrode active material was $LiFe_{0.4}Mn_{0.59}Mg_{0.01}(PO_4)$, and the surface of the primary particles of the positive electrode active material was coated with a carbon coating layer. By measurement with a carbon-sulfur analyzer, the mass percentage of carbon element in the positive electrode active material was 1.93%.

Example 7

(1) 3.69kg of lithium carbonate, 6.78kg of manganese carbonate, 6.03kg of iron phosphate, 6.90kg of ammonium dihydrogen phosphate, and 0.04kg of magnesium oxide were weighed respectively in a molar ratio of 0.50:0.59:0.4:0.6:0.01, and mixed to obtain a second raw material. The theoretical generation mass of 100mol of positive electrode active material was 15.69kg. According to the first raw material accounting for 12% of the theoretical generation mass of the positive electrode active material, 1.88kg of the first raw material was weighed; and according to sucrose accounting for 10% of a total mass of the theoretical generation mass of the positive electrode active material and the first raw material, 1.757kg of sucrose was weighed. The first raw material, the sucrose and the second raw material were mixed, and deionized water was added to obtain a first mixed slurry with a solid-liquid ratio of 1:4; where the first raw material included, by mass percentage, 84wt% of lithium manganese iron phosphate, 7wt% of lithium iron phosphate, and 9wt% of lithium manganese phosphate, with the chemical composition of the lithium manganese iron phosphate being $LiFe_{0.4}Mn_{0.6}PO_4$.

(2) The above first mixed slurry was coarsely ground at a grinding speed of 1700r/min for 70min, and then ground at a grinding speed of 2000r/min for 70min to obtain a second mixed slurry with a median particle size of 200nm.

(3) The above second mixed slurry was granulated and reshaped by a spray dryer to obtain a third raw material with a median particle size of 3.6μm, with the inlet temperature of the spray dryer being 210°C, and the outlet temperature of the spray dryer being 95°C.

(4) The third raw material was heated from room temperature to a sintering temperature of 670°C at a heating rate of 8°C/min and subjected to a soaking sintering for 8h under a nitrogen protective atmosphere to obtain the positive electrode active material of this example. The chemical composition of the positive electrode active material was $LiFe_{0.4}Mn_{0.59}Mg_{0.01}(PO_4)$, and the surface of the primary particles of the positive electrode active material was coated with a carbon coating layer. By measurement with a carbon-sulfur analyzer, the mass percentage of carbon element in the positive electrode active material was 1.90%.

Example 8

(1) 3.69kg of lithium carbonate, 6.78kg of manganese carbonate, 6.03kg of iron phosphate, 6.90kg of ammonium dihydrogen phosphate, and 0.04kg of magnesium oxide were weighed respectively in a molar ratio of 0.50:0.59:0.4:0.6:0.01, and mixed to obtain a second raw material. The theoretical generation mass of 100mol of positive electrode active material was 15.69kg. According to the first raw material accounting for 12% of the theoretical generation mass of the positive electrode active material, 1.88kg of the first raw material was weighed. The first raw material and the second raw material were mixed, and deionized water was added to obtain a first mixed slurry with a solid-liquid ratio of 1:4; where the first raw material included, by mass percentage, 80wt% of lithium manganese iron phosphate, 8wt% of lithium iron phosphate, and 12wt% of lithium manganese phosphate, with the chemical composition of the lithium manganese iron phosphate being $LiFe_{0.4}Mn_{0.6}PO_4$.

(2) The above first mixed slurry was coarsely ground at a grinding speed of 1700r/min for 60min, and then ground at a grinding speed of 1800r/min for 50min to obtain a second mixed slurry with a median particle size of 330nm.

(3) The above second mixed slurry was granulated and reshaped by a spray dryer to obtain a third raw material with a median particle size of 3.6μm, with the inlet temperature of the spray dryer being 210°C, and the outlet temperature of the spray dryer being 95°C.

(4) The third raw material was heated from room temperature to a sintering temperature of 650°C at a heating rate of 5°C/min and subjected to a soaking sintering for 6h under a nitrogen protective atmosphere to obtain the positive electrode active material of this example. The chemical composition of the positive electrode active material was $LiFe_{0.4}Mn_{0.59}Mg_{0.01}(PO_4)$.

Example 9

(1) 3.69kg of lithium carbonate, 6.78kg of manganese carbonate, 6.03kg of iron phosphate, 6.90kg of ammonium dihydrogen phosphate, and 0.04kg of magnesium oxide were weighed respectively in a molar ratio of 0.50:0.59:0.4:0.6:0.01, and mixed to obtain a second raw material. The theoretical generation mass of 100mol of positive electrode active material was 15.69kg. According to the first raw material accounting for 12% of the theoretical generation mass of the positive electrode active material, 1.88kg of the first raw material was weighed; and according to sucrose accounting for 14% of a total mass of the theoretical generation mass of the positive electrode active material and the first raw material, 2.460kg of sucrose was weighed. The first raw material, the sucrose and the second raw material were mixed, and deionized water was added to obtain a first mixed slurry with a solid-liquid ratio of 1:4; where the first raw material included, by mass percentage, 80wt% of lithium manganese iron phosphate, 8wt% of lithium iron phosphate, and 12wt% of lithium manganese phosphate, with the chemical composition of the lithium manganese iron phosphate being $LiFe_{0.4}Mn_{0.6}PO_4$.

(2) The above first mixed slurry was coarsely ground at a grinding speed of 1700r/min for 60min, and then ground at a grinding speed of 1800r/min for 50min to obtain a second mixed slurry with a median particle size of 330nm.

(3) The above second mixed slurry was granulated and reshaped by a spray dryer to obtain a third raw material with a median particle size of 3.6μm, with the inlet temperature of the spray dryer being 210°C, and the outlet temperature of the spray dryer being 95°C.

(4) The third raw material was heated from room temperature to a sintering temperature of 650°C at a heating rate of 5°C/min and subjected to a soaking sintering for 6h under a nitrogen protective atmosphere to obtain the positive electrode active material of this example. The chemical composition of the positive electrode active material was $LiFe_{0.4}Mn_{0.59}Mg_{0.01}(PO_4)$, and the surface of the primary particles of the positive electrode active material was coated with a carbon coating layer. By measurement with a carbon-sulfur analyzer, the mass percentage of carbon element in the positive electrode active material was 2.11%.

Example 10

(1) 3.69kg of lithium carbonate, 6.78kg of manganese carbonate, 6.03kg of iron phosphate, 6.90kg of ammonium dihydrogen phosphate, and 0.04kg of magnesium oxide were weighed respectively in a molar ratio of 0.50:0.59:0.4:0.6:0.01, and mixed to obtain a second raw material. The theoretical generation mass of 100mol of positive electrode active material was 15.69kg. According to the first raw material accounting for 12% of the theoretical generation mass of the positive electrode active material, 1.88kg of the first raw material was weighed; and according to sucrose accounting for 6% of a total mass of the theoretical generation mass of the positive electrode active material and the first raw material, 1.054kg of sucrose was weighed. The first raw material, the sucrose and the second raw material were mixed, and deionized water was added to obtain a first mixed slurry with a solid-liquid ratio of 1:4; where the first raw material included, by mass percentage, 80wt% of lithium manganese iron phosphate, 8wt% of lithium iron phosphate, and 12wt% of lithium manganese phosphate, with the chemical composition of the lithium manganese iron phosphate being $LiFe_{0.4}Mn_{0.6}PO_4$.

(2) The above first mixed slurry was coarsely ground at a grinding speed of 1700r/min for 60min, and then ground at a grinding speed of 1800r/min for 50min to obtain a second mixed slurry with a median particle size of 330nm.

(3) The above second mixed slurry was granulated and reshaped by a spray dryer to obtain a third raw material with a median particle size of 3.6μm, with the inlet temperature of the spray dryer being 210°C, and the outlet temperature of the spray dryer being 95°C.

(4) The third raw material was heated from room temperature to a sintering temperature of 650°C at a heating rate of 5°C/min and subjected to a soaking sintering for 6h under a nitrogen protective atmosphere to obtain the positive electrode active material of this example. The chemical composition of the positive electrode active material was $LiFe_{0.4}Mn_{0.59}Mg_{0.01}(PO_4)$, and the surface of the primary particles of the positive electrode active material was coated with a carbon coating layer. By measurement with a carbon-sulfur analyzer, the mass percentage of carbon element in the positive electrode active material was 1.81%.

Example 11

(1) 3.69kg of lithium carbonate, 6.78kg of manganese carbonate, 6.03kg of iron phosphate, 6.90kg of ammonium dihydrogen phosphate, and 0.04kg of magnesium oxide were weighed respectively in a molar ratio of 0.50:0.59:0.4:0.6:0.01, and mixed to obtain a second raw material. The theoretical generation mass of 100mol of positive electrode active material was 15.69kg. According to the first raw material accounting for 12% of the theoretical generation mass of the positive electrode active material, 1.88kg of the first raw material was weighed; and according to sucrose accounting for 4% of a total mass of the theoretical generation mass of the positive electrode active material and the first raw material, 0.703kg of sucrose was weighed. The first raw material, the sucrose and the second raw material were mixed, and deionized water was added to obtain a first mixed slurry with a solid-liquid ratio of 1:4; where the first raw material included, by mass percentage, 80wt% of lithium manganese iron phosphate, 8wt% of lithium iron phosphate, and 12wt% of lithium manganese phosphate, with the chemical composition of the lithium manganese iron phosphate being $LiFe_{0.4}Mn_{0.6}PO_4$.

(2) The above first mixed slurry was coarsely ground at a grinding speed of 1700r/min for 60min, and then ground at a grinding speed of 1800r/min for 50min to obtain a second mixed slurry with a median particle size of 330nm.

(3) The above second mixed slurry was granulated and reshaped by a spray dryer to obtain a third raw material with a median particle size of 3.6$\mu$m, with the inlet temperature of the spray dryer being 210°C, and the outlet temperature of the spray dryer being 95°C.

(4) The third raw material was heated from room temperature to a sintering temperature of 650°C at a heating rate of 5°C/min and subjected to a soaking sintering for 6h under a nitrogen protective atmosphere to obtain the positive electrode active material of this example. The chemical composition of the positive electrode active material was $LiFe_{0.4}Mn_{0.59}Mg_{0.01}(PO_4)$, and the surface of the primary particles of the positive electrode active material was coated with a carbon coating layer. By measurement with a carbon-sulfur analyzer, the mass percentage of carbon element in the positive electrode active material was 1.52%.

Example 12

(1) 3.69kg of lithium carbonate, 6.78kg of manganese carbonate, 6.03kg of iron phosphate, 6.90kg of ammonium dihydrogen phosphate, and 0.04kg of magnesium oxide were weighed respectively in a molar ratio of 0.50:0.59:0.4:0.6:0.01, and mixed to obtain a second raw material. The theoretical generation mass of 100mol of positive electrode active material was 15.69kg. According to the first raw material accounting for 12% of the theoretical generation mass of the positive electrode active material, 1.88kg of the first raw material was weighed; and according to sucrose accounting for 10% of a total mass of the theoretical generation mass of the positive electrode active material and the first raw material, 1.757kg of sucrose was weighed. The first raw material, the sucrose and the second raw material were mixed, and deionized water was added to obtain a first mixed slurry with a solid-liquid ratio of 1:4; where the first raw material included, by mass percentage, 80wt% of lithium manganese iron phosphate, 8wt% of lithium iron phosphate, and 12wt% of lithium manganese phosphate, with the chemical composition of the lithium manganese iron phosphate being $LiFe_{0.4}Mn_{0.6}PO_4$.

(2) The above first mixed slurry was coarsely ground at a grinding speed of 1400r/min for 50min, and then ground at a grinding speed of 1200r/min for 50min to obtain a second mixed slurry with a median particle size of 510nm.

(3) The above second mixed slurry was granulated and reshaped by a spray dryer to obtain a third raw material with a median particle size of 3.6$\mu$m, with the inlet temperature of the spray dryer being 210°C, and the outlet temperature of the spray dryer being 95°C.

(4) The third raw material was heated from room temperature to a sintering temperature of 650°C at a heating rate of 5°C/min and subjected to a soaking sintering for 6h under a nitrogen protective atmosphere to obtain the positive electrode active material of this example. The chemical composition of the positive electrode active material was $LiFe_{0.4}Mn_{0.59}Mg_{0.01}(PO_4)$, and the surface of the primary particles of the positive electrode active material was coated with a carbon coating layer. By measurement with a carbon-sulfur analyzer, the mass percentage of carbon element in the positive electrode active material was 1.92%.

Example 13

(1) 3.69kg of lithium carbonate, 6.78kg of manganese carbonate, 6.03kg of iron phosphate, 6.90kg of ammonium dihydrogen phosphate, and 0.04kg of magnesium oxide were weighed respectively in a ratio of 0.50:0.59:0.4:0.6:0.01, and mixed to obtain a second raw material. The theoretical generation mass of 100mol of positive electrode active material was 15.69kg. According to the first raw material accounting for 12% of the theoretical generation mass of the positive electrode active material, 1.88kg of the first raw material was weighed; and according to sucrose accounting for 10% of a total mass of the theoretical generation mass of the positive electrode active material and the first raw material, 1.757kg of sucrose was weighed. The first raw material, the sucrose and the second raw material were mixed, and deionized water was added to obtain a first mixed slurry with a solid-liquid ratio of 1:4; where the first raw material included, by mass percentage, 80wt% of lithium manganese iron phosphate, 8wt% of lithium iron phosphate, and 12wt% of lithium manganese phosphate, with the chemical composition of the lithium manganese iron phosphate being $LiFe_{0.4}Mn_{0.6}PO_4$.

(2) The above first mixed slurry was coarsely ground at a grinding speed of 1700r/min for 60min, and then ground at a grinding speed of 1800r/min for 50min to obtain a second mixed slurry with a median particle size of 330nm.

(3) The above second mixed slurry was granulated and reshaped by a spray dryer to obtain a third raw material with a median particle size of 3.9μm, with the inlet temperature of the spray dryer being 190°C, and the outlet temperature of the spray dryer being 85°C.

(4) The third raw material was heated from room temperature to a sintering temperature of 650°C at a heating rate of 5°C/min and subjected to a soaking sintering for 6h under a nitrogen protective atmosphere to obtain the positive electrode active material of this example. The chemical composition of the positive electrode active material was $LiFe_{0.4}Mn_{0.59}Mg_{0.01}(PO_4)$, and the surface of the primary particles of the positive electrode active material was coated with a carbon coating layer. By measurement with a carbon-sulfur analyzer, the mass percentage of carbon element in the positive electrode active material was 1.94%.

Comparative Example 1

The method for preparing the positive electrode active material of this comparative example is basically the same as that of Example 1, with the difference being that the first raw material is not added in this comparative example. At this time, sucrose accounts for 10% of the theoretical generation mass of the positive electrode active material, that is, 1.569kg.

Comparative Example 2

The method for preparing the positive electrode active material of this comparative example is basically the same as that of Example 1, with the difference being that the first raw material is not added in step (1), and the sintering temperature is 700°C and the sintering time is 12h.

Comparative Example 3

The method for preparing the positive electrode active material of this comparative example is basically the same as that of Example 1, with the difference being that the dopant magnesium oxide is not added in step (1).

Comparative Example 4

The method for preparing the positive electrode active material of this comparative example is basically the same as that of Example 1, with the difference being that in step (3), the sintering temperature is 620°C, the sintering time is 5h, and the heating rate is 10°C/min.

Comparative Example 5

The method for preparing the positive electrode active material of this comparative example is basically the same as that of Example 1, with the difference being that in step (2), the first mixed slurry is coarsely ground at a grinding speed of 1700r/min for 70min, and then ground at a grinding speed of 2200r/min for 90min to obtain a second mixed slurry with a median particle size of 165nm.

Comparative Example 6

The method for preparing the positive electrode active material of this comparative example is basically the same as that of Example 1, with the difference being that in step (3), the inlet temperature of the spray dryer is 230°C and its outlet temperature is 110°C, and a third raw material with a median particle size of 2.7μm is obtained.

Test example

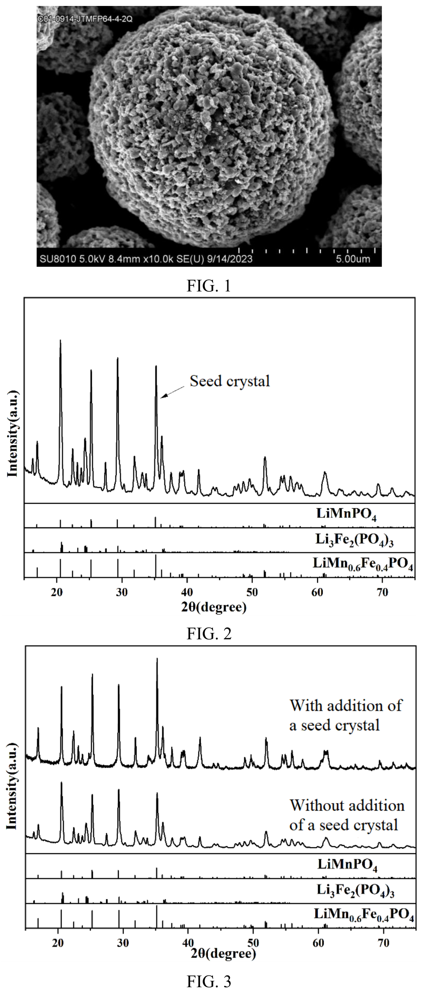

1. The physical and chemical properties of the positive electrode active materials prepared in the above examples and comparative examples were characterized, and the characterization results were shown in Table 1. Additionally, the positive electrode active material prepared in the above Example 1 was characterized by SEM, as illustrated in FIG. 1. FIG. 1 shows an SEM image of the positive electrode active material of Example 1. It can be seen from FIG. 1 that the primary particles of the positive electrode active material have high uniformity and the secondary particles have good sphericity, which can shorten the distance between the particles of the positive electrode active material and improve the transmission rate of Li$^+$. In addition, the positive electrode active material has a rough surface, which can effectively increase the contact area between the positive electrode active material and the electrolyte, increase the reaction rate of the battery, and make the battery have a high rate performance.

2. XRD characterization was performed on the first raw material in Example 1, the positive electrode active material in Example 1, and the positive electrode active material in Comparative Example 1, as shown in FIG. 2 and FIG. 3. FIG. 2 shows an XRD pattern of the first raw material in Example 1; and FIG. 3 shows XRD patterns of the positive electrode active materials in Example 1 and Comparative Example 1. As can be seen from FIG. 2, the first raw material includes lithium manganese iron phosphate $LiFe_{0.4}Mn_{0.6}PO_4$, lithium iron phosphate $Li_3Fe_2(PO_4)_3$ and lithium manganese phosphate $LiMnPO_4$. This is because during the preparation of the first raw material under an air environment, part of the lithium manganese iron phosphate decomposes to produce impure phases ($Li_3Fe_2(PO_4)_3$ and $LiMnPO_4$). Therefore, the above two impurity phases inevitably exist in the first raw material. As can be seen from FIG. 3, the positive electrode active material prepared with addition of the first raw material contains a small amount of impurity phases, and the positive electrode active material prepared without addition of the first raw material contains a large amount of impurity phases. It can thus be concluded that the positive electrode active material in Example 1 has a lower content of impurity phases and a higher crystallinity.

3. The positive electrode active materials prepared in the above examples and comparative examples were applied to lithium-ion batteries, with the specific steps as follows.

The positive electrode active material prepared above, a conductive agent carbon black, and a binder polyvinylidene fluoride were mixed at a mass ratio of 80: 10: 10, and then dispersed in N-methylpyrrolidone to prepare a positive electrode active material layer slurry. The slurry was then coated onto a surface of a positive electrode current collector aluminum foil, followed by drying, roller pressing, slitting and tab welding, obtaining a positive electrode sheet. A CR2032 button battery was prepared by assembling the positive electrode sheet with a PE/PP composite separator, a lithium sheet and electrolyte, where the electrolyte included 1mol/L lithium hexafluorophosphate, and ethylene carbonate and dimethyl carbonate in a volume ratio of 1:1.

The button batteries prepared above were subjected to rate performance and cycle performance tests.

(1) Rate performance test

The button batteries prepared above were charged and discharged at a rate of 0.1C within a voltage range of 2.0-4.3V at 25°C, with 3 cycles at 0.33C and 5 cycles at 1C, to obtain charge-discharge conditions of the batteries at different rates. The results were shown in Table 2.

(2) Cycle performance test

At 25°C, the button batteries prepared above were charged and discharged for 500 cycles at 1C within 2.0-4.3V. The initial discharge capacity was denoted as $C_0$ and the discharge capacity after 500 cycles was denoted as $C_1$. Then, a 500-cycle capacity retention rate was calculated by Formula 4:

$$500\text{-cycle capacity retention rate } (\%) = (C_1 / C_0) \times 100\% \qquad \text{Formula 4.}$$

The test results were shown in Table 2.

Table 1

| | Median particle size of the primary particle μm | Median particle size of the secondary particle μm | Specific surface area m²/g | Powder compaction density g/cm³ |
|---|---|---|---|---|
| Example 1 | 0.32 | 5.6 | 18.20 | 2.32 |
| Example 2 | 0.34 | 5.4 | 17.0 | 2.31 |
| Example 3 | 0.30 | 5.3 | 21.5 | 2.16 |
| Example 4 | 0.28 | 5.0 | 21.2 | 2.19 |
| Example 5 | 0.36 | 5.7 | 18.2 | 2.40 |
| Example 6 | 0.39 | 5.6 | 17.2 | 2.21 |
| Example 7 | 0.26 | 5.2 | 21.8 | 2.20 |
| Example 8 | 0.44 | 6.0 | 17.0 | 2.43 |
| Example 9 | 0.30 | 5.1 | 21.4 | 2.18 |
| Example 10 | 0.38 | 6.3 | 22.8 | 2.44 |
| Example 11 | 0.42 | 5.8 | 21.7 | 2.46 |
| Example 12 | 0.56 | 5.3 | 21.3 | 2.19 |
| Example 13 | 0.32 | 6.3 | 21.5 | 2.11 |
| Comparative Example 1 | 0.30 | 5.2 | 19.6 | 2.21 |
| Comparative Example 2 | 0.35 | 5.6 | 19.2 | 2.24 |
| Comparative Example 3 | 0.32 | 5.5 | 18.40 | 2.30 |
| Comparative Example 4 | 0.29 | 5.4 | 20.6 | 2.18 |
| Comparative Example 5 | 0.22 | 5.1 | 21.1 | 2.21 |
| Comparative Example 6 | 0.31 | 4.9 | 21.8 | 2.17 |

Table 2

| | Crystallinity % | Content of impurity phases % | Ion diffusion coefficient cm²/s | Electronic Conductivity S/m | Capacity retention rate % | Rate performance % |
|---|---|---|---|---|---|---|
| Example 1 | 99.6 | 0.2 | $7.9 \times 10^{-13}$ | 2.62 | 96.2 | 98.6 |
| Example 2 | 98.7 | 1.4 | $5.8 \times 10^{-13}$ | 1.89 | 91.5 | 93.8 |
| Example 3 | 99.3 | 0.7 | $6.4 \times 10^{-13}$ | 2.15 | 92.5 | 96.2 |
| Example 4 | 99.4 | 0.5 | $7.1 \times 10^{-13}$ | 2.31 | 94.2 | 96.4 |
| Example 5 | 99.1 | 0.9 | $6.2 \times 10^{-13}$ | 1.94 | 92.3 | 94.4 |
| Example 6 | 98.9 | 1.2 | $5.9 \times 10^{-13}$ | 1.91 | 91.6 | 94.2 |
| Example 7 | 99.0 | 1.1 | $6.0 \times 10^{-13}$ | 1.92 | 92.3 | 94.3 |
| Example 8 | 98.6 | 1.6 | $5.1 \times 10^{-13}$ | 1.84 | 91.5 | 93.6 |
| Example 9 | 98.4 | 2.1 | $4.4 \times 10^{-13}$ | 1.83 | 90.2 | 91.6 |
| Example 10 | 98.2 | 2.9 | $3.9 \times 10^{-13}$ | 1.64 | 89.3 | 91.4 |
| Example 11 | 98.3 | 2.6 | $4.1 \times 10^{-13}$ | 1.75 | 90.1 | 91.5 |
| Example 12 | 98.1 | 3.1 | $3.5 \times 10^{-13}$ | 1.54 | 89.3 | 90.3 |
| Example 13 | 98.5 | 1.7 | $4.6 \times 10^{-13}$ | 1.84 | 90.6 | 93.6 |
| Comparative Example 1 | 82.5 | 6.6 | $8.6 \times 10^{-14}$ | 1.44 | 88.3 | 86.8 |

(continued)

|  | Crystallinity % | Content of impurity phases % | Ion diffusion coefficient cm²/s | Electronic Conductivity S/m | Capacity retention rate % | Rate performance % |
|---|---|---|---|---|---|---|
| Comparative Example 2 | 81.2 | 7.4 | $6.2 \times 10^{-14}$ | 1.33 | 84.1 | 85.1 |
| Comparative Example 3 | 79.8 | 9.3 | $4.3 \times 10^{-14}$ | 1.10 | 82.6 | 82.1 |
| Comparative Example 4 | 80.1 | 8.1 | $5.2 \times 10^{-14}$ | 1.21 | 83.1 | 84.3 |
| Comparative Example 5 | 76.4 | 9.8 | $3.9 \times 10^{-14}$ | 1.09 | 81.6 | 81.6 |
| Comparative Example 6 | 81.6 | 6.9 | $7.0 \times 10^{-14}$ | 1.43 | 88.2 | 85.9 |

It can be seen from Table 1 and Table 2 that:
compared with the positive electrode active materials of Comparative Examples 1-6, the positive electrode active materials of Examples 1-13 have higher crystallinity, lower content of impurity phases, as well as higher ion diffusion coefficient and electronic conductivity. At the same time, the button batteries including the positive electrode active materials of Examples 1-13 have higher capacity retention rate and rate performance. The positive electrode active materials of Examples 1-13 can have a crystallinity up to 99.6%, a minimum content of impurity phases of 0.2%, an ion diffusion coefficient up to $7.9 \times 10^{-13}$, an electronic conductivity up to 2.62S/m, corresponding capacity retention rate up to 96.2%, and a rate performance up to 98.6%. It can be seen that the positive electrode active materials of the present application have higher crystallinity, which can significantly improve the rate performance of lithium-ion batteries.

Finally, it should be noted that the above embodiments are only used to illustrate the technical solutions of the present application, rather than limiting them. Although the present application has been described in detail with reference to the aforementioned embodiments, those skilled in the art should understand that they can still modify the technical solutions recorded in the aforementioned embodiments, or equivalently replace some or all of the technical features therein. However, these modifications or replacements do not make the essence of corresponding technical solutions deviate from the scope of the technical solutions of the embodiments of the present application.

**Claims**

1. A positive electrode active material, comprising a secondary particle composed of primary particles, wherein the primary particles have a chemical composition shown in Formula 1:

$$Li_{1+a}Fe_{1-x-y}Mn_xA_y(PO_4) \qquad \text{Formula 1,}$$

in the Formula 1, $-0.1 \leq a \leq 0.4$, $0.5 \leq x \leq 0.7$, $0 \leq y \leq 0.01$, and A comprises at least one of Al, Mg, Ni, Co, Ti, Ga, Cu, V, Nb, Zr, Ce, In, Zn, or Y;
the positive electrode active material has a crystallinity of not less than 98%.

2. The positive electrode active material according to claim 1, wherein the positive electrode active material further comprises a carbon coating layer covering a surface of the primary particles, with a mass percentage of carbon element in the positive electrode active material being 1.8-2.0wt%.

3. The positive electrode active material according to claim 1 or 2, wherein the positive electrode active material has a specific surface area of 17-22m²/g, and/or the positive electrode active material has a powder compaction density of 2.1-2.4g/cm³.

4. The positive electrode active material according to any one of claims 1 to 3, wherein the primary particles have a median particle size of 0.25-0.4μm, and/or the secondary particle has a median particle size of 5-6μm.

5. A method for preparing the positive electrode active material according to any one of claims 1 to 4, comprising the following steps:

(1) adding a first raw material and deionized water into a second raw material to obtain a first mixed slurry; wherein the second raw material comprises a lithium source, an iron source, a manganese source, a phosphorus source, and a dopant, and the first raw material comprises lithium manganese iron phosphate having a chemical composition shown in Formula 2:

$$Li_{1+b}Fe_{1-c}Mn_cPO_4 \qquad \text{Formula 2,}$$

in the Formula 2, $-0.1 \le b \le 0.4$, $0.5 \le c \le 0.7$;
(2) grinding the first mixed slurry to obtain a second mixed slurry, wherein the second mixed slurry has a median particle size of 200-400nm;
(3) granulating the second mixed slurry to obtain a third raw material having a median particle size of 3-4μm;
(4) sintering the third raw material under a protective atmosphere at a sintering temperature of 650-670°C for 6-8h with a heating rate of 3-8°C/min to obtain the positive electrode active material.

6. The method for preparing the positive electrode active material according to claim 5, wherein in the step (1), the first raw material further comprises lithium iron phosphate $Li_3Fe_2(PO_4)_3$ and lithium manganese phosphate $LiMnPO_4$;

the first raw material comprises, by mass percentage, 75-84wt% of lithium manganese iron phosphate, 7-10wt% of lithium iron phosphate, and 9-15wt% of lithium manganese phosphate;
and/or, the first raw material accounts for 10-15% of a theoretical generation mass of the positive electrode active material.

7. The method for preparing the positive electrode active material according to claim 5 or 6, wherein in the step (1), the second raw material further comprises a carbon source; and the carbon source accounts for 8-12% of a total mass of a theoretical generation mass of the positive electrode active material and the first raw material.

8. The method for preparing the positive electrode active material according to any one of claims 5 to 7, wherein in the step (2), the grinding comprises a first grinding and a second grinding;

the first grinding has a grinding speed of 1400-1700r/min and a grinding time of 50-70min;
the second grinding has a grinding speed of 1600-2000r/min and a grinding time of 50-70min.

9. A positive electrode sheet, comprising the positive electrode active material according to any one of claims 1 to 4 or the positive electrode active material prepared by the method for preparing the positive electrode active material according to any one of claims 5 to 8.

10. A lithium-ion battery, comprising the positive electrode active material according to any one of claims 1 to 4, or the positive electrode active material prepared by the method for preparing the positive electrode active material according to any one of claims 5 to 8, or the positive electrode sheet according to claim 9.

FIG. 1

FIG. 2

FIG. 3

## INTERNATIONAL SEARCH REPORT

| International application No. |
| --- |
| **PCT/CN2024/132803** |

| A. | CLASSIFICATION OF SUBJECT MATTER |
| --- | --- |

H01M4/58(2010.01)i; H01M4/136(2010.01)i; H01M4/36(2006.01)i; H01M4/62(2006.01)i; C01B25/45(2006.01)i; H01M10/0525(2010.01)i

According to International Patent Classification (IPC) or to both national classification and IPC

| B. | FIELDS SEARCHED |
| --- | --- |

Minimum documentation searched (classification system followed by classification symbols)

IPC:H01M4/-; C01B25/-; H01M10/-

Documentation searched other than minimum documentation to the extent that such documents are included in the fields searched

Electronic data base consulted during the international search (name of data base and, where practicable, search terms used)

CNTXT, VCN, ENTXTC, CNKI, ISI_Web of Science: 电池, 正极, 活性材料, 磷酸锰铁锂, 磷酸铁锂, 磷酸锰锂, 锂, 铁, 锰, 铝, 镁, 镍, 钴, 钛, 镓, 铜, 钒, 铌, 锆, 铈, 铟, 锌, 钇, 过渡金属, 磷酸, 掺杂, 碳, 结晶度, Li, Fe, Mn, Al, Mg, Ni, Co, Ti, Ga, Cu, V, Nb, Zr, Ce, In, Zn, Y, PO4, Dv50, battery, anode, positive, pole, active, material, lithium, iron, manganese, phosphate, carbon, transition, metal, doping, crystallinity

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117525394 A (NINGBO RONBAY NEW ENERGY TECHNOLOGY CO., LTD.) 06 February 2024 (2024-02-06) <br> claims 1-10 | 1-10 |
| X | CN 115020678 A (ENVISION POWER TECHNOLOGY (JIANGSU) CO., LTD. et al.) 06 September 2022 (2022-09-06) <br> description, paragraphs 17-21, 36, and 66 | 1-4, 9-10 |
| A | CN 114988386 A (SVOLT ENERGY TECHNOLOGY CO., LTD.) 02 September 2022 (2022-09-02) <br> entire document | 1-10 |
| A | CN 115692655 A (FOSHAN DYNANONIC CO., LTD.) 03 February 2023 (2023-02-03) <br> entire document | 1-10 |
| A | CN 115763733 A (NINGBO RONBAY NEW ENERGY TECHNOLOGY CO., LTD.) 07 March 2023 (2023-03-07) <br> entire document | 1-10 |

☑ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 January 2025** | **22 January 2025** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/132803** |

| C. | DOCUMENTS CONSIDERED TO BE RELEVANT | |
| --- | --- | --- |
| Category* | Citation of document, with indication, where appropriate, of the relevant passages | Relevant to claim No. |
| A | WO 2019171994 A1 (TORAY INDUSTRIES, INC.) 12 September 2019 (2019-09-12)<br>entire document | 1-10 |

**INTERNATIONAL SEARCH REPORT**
Information on patent family members

International application No.

**PCT/CN2024/132803**

| Patent document cited in search report | | | Publication date (day/month/year) | Patent family member(s) | | | Publication date (day/month/year) |
|---|---|---|---|---|---|---|---|
| CN | 117525394 | A | 06 February 2024 | None | | | |
| CN | 115020678 | A | 06 September 2022 | None | | | |
| CN | 114988386 | A | 02 September 2022 | None | | | |
| CN | 115692655 | A | 03 February 2023 | None | | | |
| CN | 115763733 | A | 07 March 2023 | None | | | |
| WO | 2019171994 | A1 | 12 September 2019 | JP | 6645621 | B1 | 14 February 2020 |
| | | | | JPWO | 2019171994 | A1 | 16 April 2020 |
| | | | | TW | 201938481 | A | 01 October 2019 |
| | | | | TWI | 782192 | B | 01 November 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311729060